# EUROPEAN PATENT SPECIFICATION

(11) **EP 4 593 246 B1**
(45) Date of publication and mention of the grant of the patent: **09.12.2026**
(21) Application number: 24307270.9
(22) Date of filing: 23.12.2024
(51) Int. Cl.: H02J 9/06

(54) **METHOD AND APPARATUS FOR POWER SELECTION CONTROL OF A DUAL POWER SUPPLY TRANSFER SWITCH DEVICE**
VERFAHREN UND VORRICHTUNG ZUR LEISTUNGSAUSWAHLSTEUERUNG EINER SCHALTVORRICHTUNG MIT DOPPELTER STROMVERSORGUNG
PROCÉDÉ ET APPAREIL DE COMMANDE DE SÉLECTION DE PUISSANCE D'UN DISPOSITIF DE COMMUTATION DE TRANSFERT D'ALIMENTATION ÉLECTRIQUE DOUBLE

(30) Priority: 26.01.2024 CN 202410118380
(43) Date of publication of application: 30.07.2025
(73) Proprietor: SCHNEIDER ELECTRIC INDUSTRIES SAS, 92500 Rueil-Malmaison (FR)
(72) Inventor: YIN, Jiting, Shanghai 201203 (CN); YING, Xiaoping, Shanghai 201203 (CN); WU, Di, Shanghai 201203 (CN)
(74) Representative: Manitz Finsterwald Patent- und Rechtsanwaltspartnerschaft mbB

(56) References cited:
- CN-A- 108 306 411
- CN-A- 114 179 624
- CN-B- 103 036 304

## Description

### FIELD

Example embodiments of the present disclosure generally relate to a field of electrical equipment, and more particularly, to a method and an apparatus for power selection control of a dual power supply transfer switch device, a dual power supply transfer switch device, and a computer readable storage medium.

### BACKGROUND

In a dual power supply transfer switch device (or ATS device for short), as an operating current becomes larger and larger, an opening action of the device needs to overcome a larger force to be completed, and switching of two power supplies cannot be realized simply by means of an action of an electromagnetic coil. To this end, an energy storage mechanism, such as an energy storage motor, is introduced into the ATS device. Before opening, energy is stored in the energy storage mechanism, and when opening, the energy stored in the energy storage mechanism can be used to assist a transferring mechanism to complete the opening action. Because both an energy storage process and a transferring process need a power supply, the ATS device needs to select the power supply from two power supplies to supply power to the energy storage mechanism and the transferring mechanism during working.

CN 103 036 304 B discloses a method for power selection control of a dual power supply transfer switch device according to the preamble of claim 1.

### SUMMARY

Embodiments of the present disclosure provide a method and an apparatus for power selection control of a dual power supply transfer switch device, a dual power supply transfer switch device, and a computer readable storage medium.

In a first aspect of the present disclosure, a method for power selection control of a dual power supply transfer switch device is provided. The dual power supply transfer switch device includes a transferring unit, an energy storage unit and a common power selection unit. The transferring unit is capable of being opened from a first switching-on position for switching on a first power supply or a second switching-on position for switching on a second power supply to a middle position, and being closed from the middle position to the first switching-on position or the second switching-on position. The energy storage unit is capable of assisting the transferring unit to be opened. The common power selection unit is capable of selecting, from the first power supply and the second power supply, a power supply for supplying power to the transferring unit and the energy storage unit. The method includes: in response to that a transferring command for the transferring unit is received, determining a timing for the transferring unit occupying the common power selection unit based on a type of the transferring command; in response to that the transferring unit does not occupy the common power selection unit, allowing the energy storage unit to occupy the common power selection unit; and in response to that the transferring unit occupies the common power selection unit, prohibiting the energy storage unit from occupying the common power selection unit.

In a second aspect of the present disclosure, an apparatus for power selection control of a dual power supply transfer switch device is provided. The apparatus includes at least one processing unit, and at least one memory coupled to the at least one processing unit and storing instructions for execution by the at least one processing unit that, which, when executed by the at least one processing unit, cause the apparatus to perform the method of the first aspect of the present disclosure.

In a third aspect of the present disclosure, provided is a dual power supply transfer switch device, including: a transferring unit capable of being opened from a first switching-on position for switching on a first power supply or a second switching-on position for switching on a second power supply to a middle position and being closed from the middle position to the first switching-on position or the second switching-on position; an energy storage unit capable of assisting the transferring unit to be opened; a common power selection unit capable of selecting, from the first power supply and the second power supply, a power supply for supplying power to the transferring unit and the energy storage unit; and the apparatus of the second aspect of the present disclosure, configured to control an occupation timing of the transferring unit and the energy storage unit for the common power selection unit.

In a fourth aspect of the present disclosure, there is provided a computer readable storage medium, having a computer program stored thereon, wherein the computer program is executable by a processor to implement the method of the first aspect of the present disclosure.

It should be understood from the following description that, according to embodiments of the present disclosure, a predetermined power selection rule may be adopted, and the energy storage unit and the transferring unit are controlled by the same power selection circuit, so that an energy storage process and a transferring process do not affect with each other. In this manner, structure of a circuit board in the dual power supply transfer switch device can be simplified, a space of the circuit board can be saved, and cost of the dual power supply transfer switch device can be reduced. Other benefits will be described below in conjunction with corresponding embodiments.

It should be understood that what is described in the Summary is not intended to limit critical or essential features of embodiments of the present disclosure, nor is it intended to limit a scope of the present disclosure. Other features of the present disclosure will become readily understood from the following description.

### BRIEF DESCRIPTION OF THE DRAWINGS

The above and other features, advantages, and aspects of various embodiments of the present disclosure will become more apparent with reference to the following detailed description taken in conjunction with drawings. In the drawings, the same or similar reference signs denote the same or similar elements, wherein:
FIGS. 1 and 2 illustrate a schematic block diagram of a conventional dual power supply transfer switch device;
FIG. 3 illustrates a schematic block diagram of a dual power supply transfer switch device according to some embodiments of the present disclosure;
FIG. 4 illustrates a schematic block diagram of an apparatus for power selection control of a dual power supply transfer switch device according to some embodiments of the present disclosure;
FIG. 5 illustrates a flowchart of a process for power selection control of a dual power supply transfer switch device according to some embodiments of the present disclosure;
FIG. 6 illustrates a flowchart of a transferring power selection process according to some embodiments of the present disclosure;
FIG. 7 illustrates a flowchart of an energy storage power selection process according to some embodiments of the present disclosure;
FIG. 8 illustrates example timing of an energy storage process and a transferring process according to some embodiments of the present disclosure; and
FIG. 9 illustrates a block diagram of a device capable of implementing various embodiments of the present disclosure.

### DETAILED DESCRIPTION

Embodiments of the present disclosure will be described in more detail below with reference to the drawings. Although certain embodiments of the present disclosure are shown in the drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes and are not intended to limit a scope of the present disclosure.

In the description of embodiments of the present disclosure, the term "including" and the like should be understood as open-ended including, that is, "including but not limited to". The term "based on" should be read as "based at least in part on". The term "one embodiment" or "the embodiment" should be read as "at least one embodiment". The term "some embodiments" should be understood as "at least some embodiments. " Other explicit and implicit definitions may also be included below. The terms "first", "second", etc. may refer to different or identical objects. Other explicit and implicit definitions may also be included below.

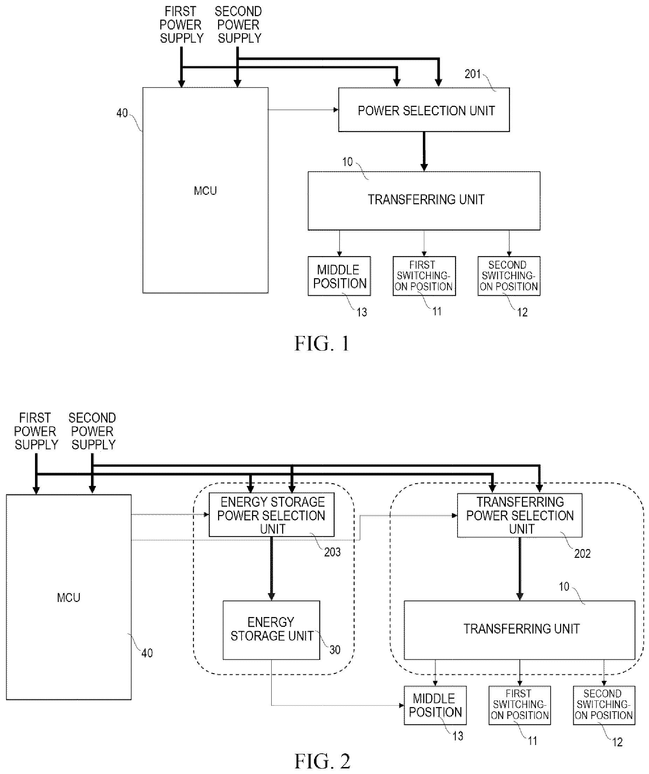

As mentioned briefly above, in a large current ATS device, an opening action of the device needs to overcome a larger force to be completed, and switching of two power supplies cannot be realized simply by means of an action of an electromagnetic coil. To this end, an energy storage mechanism, such as an energy storage motor, is introduced into the ATS device. Before opening, energy is stored in the energy storage mechanism, and when opening, the energy stored in the energy storage mechanism can be used to assist a transferring mechanism to complete the opening action. FIGS. 1 and 2 illustrate schematic block diagrams of the two conventional dual power supply transfer switch devices.

As shown in FIG. 1, a conventional dual power supply transfer switch device includes a power selection unit 201, a transferring unit 10, and a control unit 40. The power selection unit 201 and the control unit 40 are connected to a first power supply and a second power supply. The power selection unit 201 can select, from the first power supply and the second power supply, a power supply for supplying power to the transferring unit 10 under control of the control unit 40. The transferring unit 10 is capable of being switched between a first switching-on position 11 for switching on the first power supply, a second switching-on position 12 for switching on the second power supply, and a middle position 13. The transferring unit 10 may implement switching between two power supplies through an action of an electromagnetic coil. However, as an operating current becomes larger and larger, an opening action of the dual power supply transfer switch device needs larger energy to complete, and switching of the power supplies cannot be implemented simply by means of an electromagnetic coil.

As shown in FIG. 2, another conventional dual power supply transfer switch device includes a transferring power selection unit 202, a transferring unit 10, an energy storage power selection unit 203, an energy storage unit 30, and a control unit 40. The switching power selection unit 202 can select, from the first power supply and the second power supply, a power supply for supplying power to the transferring unit 10 under control of the control unit 40. The transferring unit 10 is capable of being switched between a first switching-on position 11, a second switching-on position 12 and a middle position 13. The energy storage power selection unit 203 is capable of selecting, from the first power supply and the second power supply, a power supply for supplying power to the energy storage unit 30 under the control of the control unit 40. The energy storage unit 30 can assist the transferring unit 10 to be opened from the first switching-on position 11 or the second switching-on position 12 to the middle position 13. In this case, the transferring power selection unit 202 and the energy storage power selection unit 203 can independently control the transferring unit 10 and the energy storage unit 30, and do not interfere with each other and affect with each other, therefore, control logic is simple. However, this implementation requires more hardware circuits, more electronic components, and more structures, thus occupying a larger circuit board space and increasing device costs.

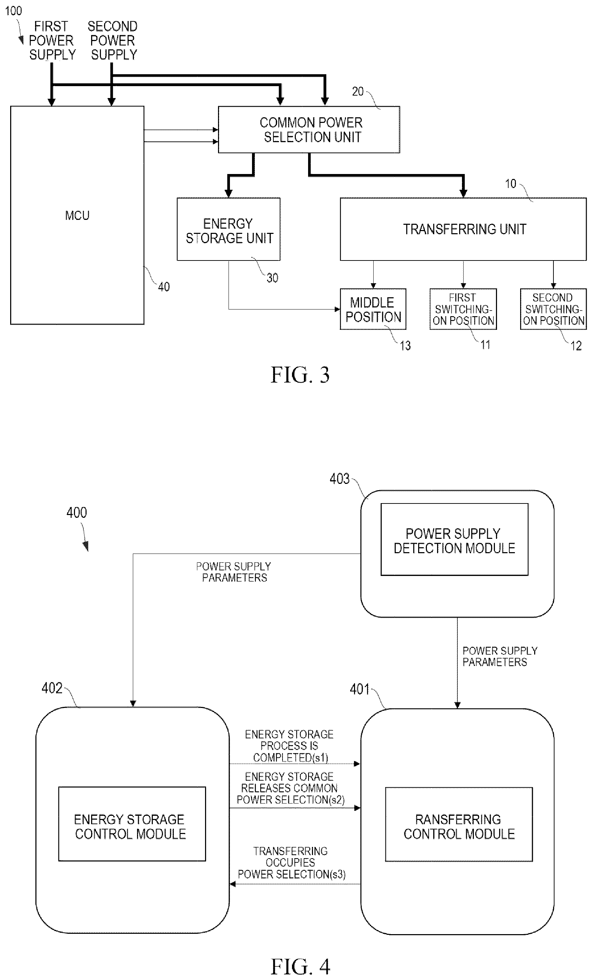

A purpose of the present disclosure is to provide a power selection control solution for the dual power supply transfer switch device, wherein a transferring unit and an energy storage unit share a single power selection unit, by coordinating execution logic of a transferring process and an energy storage process, power supply and control of both the transferring unit and the energy storage unit can be realized by using only the single power selection unit. A principle of the present disclosure will be described in detail below in conjunction with FIGS. 3 to 9.

FIG. 3 illustrates a schematic block diagram of a dual power supply transfer switch device 100 according to some embodiments of the present disclosure. As shown in FIG. 3, the dual power supply transfer switch device 100 described herein generally includes a transferring unit 10, an energy storage unit 30, a common power selection unit 20, and a control unit 40. In particular, the transferring unit 10 is capable of being opened from a first switching-on position 11 for switching on a first power supply or from a second switching-on position 12 for switching on a second power supply to a middle position 13 and being closed from the middle position 13 to the first switching-on position 11 or to the second switching-on position 12. The first supply and the second power supply may be various types of power supplies. As an example, the first power supply may be utility power and the second power supply may be a generator. The transferring unit 10 may adopt various known or future-available structures, and embodiments of the present disclosure are not limited thereto. Because the transferring unit 10 needs to overcome a large force when opening, the energy storage unit 30 is provided to assist the transferring unit 10 to be opened. The energy storage unit 30 is capable of performing an energy storage process, and stored energy is capable of assisting the transferring unit 10 to be switched from the first switching-on position 11 or the second switching-on position 12 to the middle position 13. The energy storage unit 30 may adopt various known or future-available structures, and embodiments of the present disclosure are not limited thereto. As an example, the energy storage unit 30 may include an energy storage motor. The common power selection unit 20 is connected to both the transferring unit 10 and the energy storage unit 30 to select, from the first power supply and the second power supply, a power supply for supplying power to the transferring unit 10 and the energy storage unit 30 under control of the control unit 40. In an embodiment, the control unit 40 may be a micro control unit (MCU).

Since the dual power supply transfer switch device 100 includes only a single power selection unit, that is, a common power selection unit 20, it is necessary to coordinate execution logic of the transfer process and the energy storage process so as to supply power to and control both the transferring unit 10 and the energy storage unit 30. To this end, embodiments of the present disclosure provide an apparatus 400 for power selection control of the dual power supply transfer switching device 100, as shown in FIG. 4.

**In** some embodiments, as shown in FIG. 4, the device 400 includes a transferring control module 401 and an energy storage control module 402. The transferring control module 401 may interact with the energy storage control module 402. In an embodiment, the energy storage control module 402 is capable of providing a first indication signal s1 to the transferring control module 401, the first indication signal s1 being used to indicate whether an energy storage process of the energy storage unit 30 has been completed. If the energy storage process has been completed, the first indication signal s1 may be in one state, and if the energy storage process has not been completed, the first indication signal s1 may be in another state. In an embodiment, the energy storage control module 402 is capable of providing a second indication signal s2 to the transferring control module 401, the second indication signal s2 being used to indicate whether the energy storage unit 30 occupies the common power selection unit 20. If the energy storage unit 30 occupies the common power selection unit 20, the second indication signal s2 may be in one state, and if the energy storage unit 30 does not occupy (i.e., has released) the common power selection unit 20, the second indication signal s2 may be in another state. In an embodiment, the transferring control module 401 can provide a third indication signal S3 to the energy storage control module 402 to indicate whether the transferring unit 10 occupies the common power selection unit 20. If the transferring unit 10 occupies the common power selection unit 20, the third indication signal s3 may be in one state, and if the transferring unit 10 does not occupy (i.e., has released) the common power selection unit 20, the third indication signal s3 may be in another state.

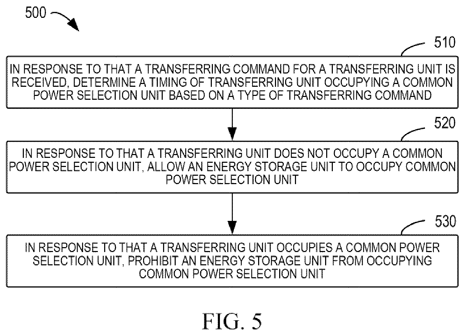

**In** an embodiment, as shown in FIG. 4, the apparatus 400 may further include a power supply detection module 403. The power supply detection module 403 is capable of detecting power supply parameters of the first power supply and the second power supply, such as voltage, frequency, and other parameters. The power detection module 403 may send the detected parameters of the two power supplies to the transferring control module 401 and the energy storage control module 402. The transferring control module 401 may determine whether the transferring unit 10 needs to perform a transferring process based on the received power supply parameters and a predetermined transferring rule. In response to that the predetermined transferring rule is satisfied, the transferring control module 401 may occupy the common power selection unit 20, so that the common power selection unit 20 selects, from the first power supply and the second power supply, a power supply for supplying power to the transferring unit 10. In an embodiment, in response to that the predetermined transferring rule is satisfied, a transferring command may be generated. The transferring command indicates that the transferring unit 10 is to perform the transferring process. The energy storage control module 402 may determine whether the transferring unit 30 needs to perform an energy storage process based on the received power supply parameters and a predetermined energy storage rule. In response to that the predetermined energy storage rule is satisfied, the energy storage control module 402 may occupy the common power selection unit 20, so that the common power selection unit 20 selects, from the first power supply and the second power supply, a power supply for supplying power to the energy storage unit 30. Embodiments of the present disclosure are mainly intended to coordinate the execution logic of the energy storage process and the transferring process, and no particular limitation is imposed on a power state of the energy storage unit 30 and a power state of the transferring unit 10. The execution logic of the energy storage process and the transferring process will be described in detail below in conjunction with FIGS. 5 to 8.

FIG. 5 illustrates a flowchart of a process 500 for power selection control of a dual power supply transfer switch device, according to some embodiments of the present disclosure.

As shown in FIG. 5, at block 510, in response to that a transferring command for a transferring unit 10 is received, determining a timing of the transferring unit 10 occupying the common power selection unit 20 based on a type of the transferring command. An operation at block 510 is an operation to be performed in a transferring power selection process and may be performed by the transferring control module 401.

At block 520, in response to that the transferring unit 10 does not occupy the common power selection unit 20, allowing the energy storage unit 30 to occupy the common power selection unit 20. An operation at block 520 is an operation to be performed in an energy storage power selection process and may be performed by the energy storage control module 402.

At block 530, in response to that the transferring unit 10 occupies the common power selection unit 20, prohibiting the energy storage unit 30 from occupying the common power selection unit 20. An operation at block 530 is an operation to be performed in the energy storage power selection process and may be performed by the energy storage control module 402.

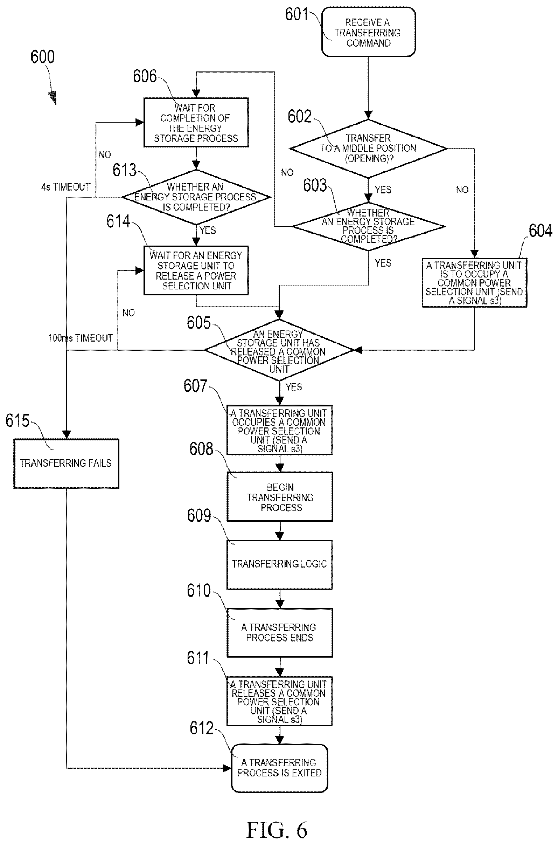

FIG. 6 illustrates a flowchart of a transferring power selection process 600, according to some embodiments of the present disclosure. The transferring power selection process 600 may be performed by the transferring control module 401.

As shown in FIG. 6, at block 601, the transferring control module 401 may receive the transferring command, which may indicate the transferring unit 10 to perform a transferring process, e. g., being opened from the first switching-on position 11 or the second switching-on position 12 to the middle position 13 or being closed from the middle position 13 to the first switching-on position 11 or the second switching-on position 12. For example, the transferring command may be generated by the apparatus 400 in response to that a predetermined transferring rule is satisfied.

At block 602, the transferring control module 401 may determine whether the transferring command indicates being opened from the first switching-on position 11 or the second switching-on position 12 to the middle position 13. If so, the transferring power selection process 600 proceeds to block 603, and if not (i.e., the transferring command indicates being closed from the middle position 13 to the first switching-on position 11 or the second switching-on position 12), the transferring power selection process 600 proceeds to block 604.

At block 603, the transferring control module 401 may determine whether an energy storage process of the energy storage unit 30 is completed based on a first indication signal s1 received from the energy storage control module 402. If so, the transferring power selection process 600 proceeds to block 605, and if not, the transferring power selection process 600 proceeds to block 606.

At block 604, the transferring control module 401 may send a third indication signal s3 to the energy storage control module 402 to indicate that the transferring unit 10 is to occupy the common power selection unit 20. Then, the transferring power selection process 600 may proceed to block 605.

At block 605, the transferring control module 401 may determine whether the energy storage unit 30 has released the common power selection unit 20 based on the second indication signal s2 received from the energy storage control module 402. The case that the energy storage unit 30 releases the common power selection unit 20 means that the energy storage unit 30 does not occupy the common power selection unit 20. The case that the energy storage unit 30 does not release the common power selection unit 20 means that the energy storage unit 30 still occupies the common power selection unit 20. If the energy storage unit 30 has released the common power selection unit 20, the transferring power selection process 600 proceeds to block 607. If the energy storage unit 30 has not released (still occupies) the common power selection unit 20, the transferring power selection process 600 proceeds to block 614.

At block 606, the transferring control module 401 waits for completion of the energy storage process and the transferring selection process 600 proceeds to block 613. Since the opening of the transferring unit 10 needs assistance of the energy storage unit 30, the transferring control module 401 needs to wait for completion of the energy storage process and after the energy storage unit 30 stops occupying the common power selection unit 20, so as to allow the transferring unit 10 to occupy the common power selection unit 20, so that the transferring unit 100 performs the transferring process.

At block 607, the transferring control module 401 causes the transferring unit 10 to occupy the common power selection unit 20 to begin the transferring process.

At block 608, the transferring control module 401 causes the transferring unit 10 to begin performing the transferring process.

At block 609, the transferring control module 401 causes the transferring unit 10 to perform a opened or an closed transferring according to transferring logic.

At block 610, the transferring process ends.

At block 611, the transferring control module 401 sends a third indication signal s3 to the energy storage control module 402, so as to indicate the transferring unit 10 to release the common power selection unit 20, that is, to no longer occupy the common power selection unit 20.

At block 612, the transferring process is exited.

At block 613, the transferring control module 401 determines whether the energy storage process of the energy storage unit 30 is completed. If so, the transferring power selection process 600 proceeds to block 614. If not, the transferring power selection process 600 returns to block 606 and continues to wait for the completion of the energy storage process. In an embodiment, if the energy storage process of the energy storage unit 30 has not completed within a first time threshold, the transferring process is determined to fail at block 615. In an embodiment, the first time threshold is, for example, 4 seconds or other amount of time. Accordingly, in response to that the energy storage process is completed within the first time threshold, the transferring control module 401 will wait at block 614 for the energy storage unit 30 to stop occupying the common power selection unit 20 to cause the transferring unit 10 to occupy the common power selection unit 20 after the energy storage unit 30 stops occupying the common power selection unit 20.

It should be noted that numbers, values, etc., mentioned above and elsewhere in the present disclosure are exemplary and are not intended to limit the scope of the present disclosure in any manner. Any other suitable number or value is possible.

At block 614, the transferring control module 401 waits for the energy storage unit 30 to release the common power selection unit 20, and the transferring power selection process 600 proceeds to block 605, and the transferring control module 401 continues to determine whether the energy storage unit 30 has released the common power selection unit 20. In an embodiment, if energy storage unit 30 does not stop occupying the common power selection unit 20 within a second time threshold, the transferring process is determined to fail at block 615. In an embodiment, the second time threshold is, for example, 100 milliseconds or other amount of time. Accordingly, in response to that the energy storage unit 30 stops occupying the common power selection unit 20 within the second time threshold, the transferring control module 401 causes the transferring unit 10 to occupy the common power selection unit 20.

In some embodiments, in response to that the transferring command indicates that transferring unit 10 is to be closed and the energy storage process of energy storage unit 30 has not been completed, transferring control module 401 may cause transferring unit 10 to occupy the common power selection unit 20 after the energy storage unit 30 suspends occupying the common power selection unit 20, so as to perform the transferring process. After the transferring process ends, the energy storage control module 402 may cause the energy storage unit 30 to perform the energy storage process again.

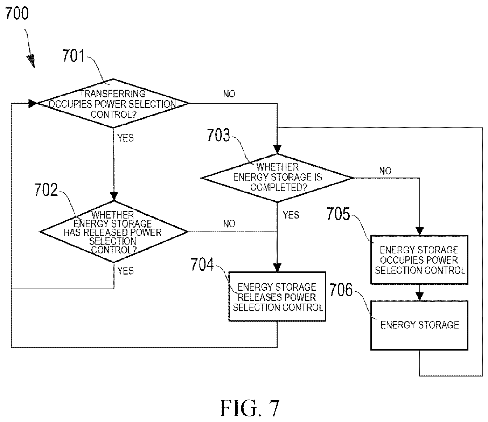

FIG. 7 illustrates a flowchart of an energy storage power selection process 700 according to some embodiments of the present disclosure. The energy storage power selection process 700 may be performed by the energy storage control module 402.

As shown in FIG. 7, at block 701, the energy storage control module 402 may determine, based on the third indication signal s3 received from the transferring control module 401, whether the transferring unit 10 occupies the common power selection unit 20. If so, the energy storage selection process 700 proceeds to block 702, and if not, the energy storage selection process 700 proceeds to block 703.

At block 702, the energy storage control module 402 may determine whether the energy storage unit 30 has released the common power selection unit 20. If so, the energy storage power selection process 700 returns to block 701, and if not, the energy storage power selection process 700 proceeds to block 704 to cause the energy storage unit 30 to release the common power selection unit 20. Since the transferring unit 10 occupies the common power selection unit 20, the energy storage control module 402 may prohibit the energy storage unit 30 from occupying the common power selection unit 20. In other words, priority of the transferring process is typically higher than priority of the energy storage process.

At block 703, the energy storage control module 402 may determine whether the energy storage process is completed, if so, the energy storage power selection process 700 proceeds to block 704, and if not, the energy storage power selection process 700 proceeds to block 705. Since the transferring unit 10 does not occupy the common power selection unit 20, the energy storage control module 402 may allow the energy storage unit 30 to occupy the common power selection unit 20, so as to perform the energy storage process.

At block 704, the energy storage control module 402 causes the energy storage unit 30 to no longer occupy the common power selection unit 20, thereby releasing power selection control. Then, the energy storage power selection process 700 returns to block 701.

At block 705, the energy storage control module 402 may cause the energy storage unit 30 to occupy the common power selection unit 20, so as to perform the energy storage process.

At block 706, the energy storage control module 402 may cause the energy storage unit 30 to perform the energy storage process. Then, the energy storage power selection process 700 returns to block 703.

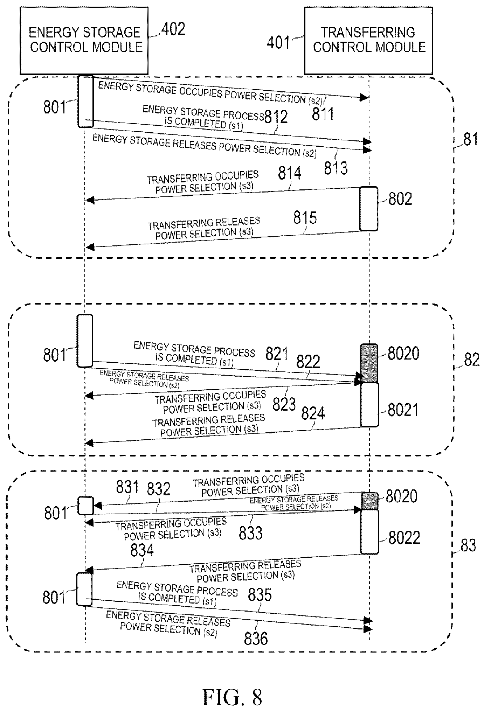

FIG. 8 illustrates example timings of an energy storage process 801 and a transferring process 802, according to some embodiments of the present disclosure. Three example timing logic of the energy storage process 801 and the transferring process 802 are illustrated in FIG. 8. A first timing logic 81 represents a situation that the transferring process 802 is performed after the energy storage process 801 is completed. A second timing logic 82 represents a situation that an opening transferring process 8021 needs to be performed during performance of the energy storage process 801. The third timing logic 83 represents a situation that a closing transferring process 8022 needs to be performed during performance of the energy storage process 801.

As shown in FIG. 8, in response to that the transferring process 802 is performed after the energy storage process 801 is completed, the transferring process 802 and the energy storage process 801 do not affect with each other.

At 811, when the energy storage process 801 begins to be performed, the energy storage control module 402 sends a second indication signal s2 to the transferring control module 401 to indicate that the energy storage unit 30 occupies the common power selection unit 20.

At 812, when the energy storage process 801 is completed, the energy storage control module 402 sends a first indication signal s1 to the transferring control module 401 to indicate that the energy storage process 801 has completed.

At 813, in response to that the energy storage unit 30 releases the common power selection unit 20, the energy storage control module 402 sends the second indication signal s2 to the transferring control module 401 to indicate that the energy storage unit 30 has released the common power selection unit 20.

At 814, when the transferring process 802 begins to be performed, the transferring control module 401 sends a third indication signal s3 to the energy storage control module 402 to indicate that the transferring unit 10 occupies the common power selection unit 20.

At 815, when the transferring process 802 ends, the transferring control module 401 sends the third indication signal s3 to the energy storage control module 402 to indicate that the transferring unit 10 releases the common power selection unit 20. So far, the first timing logic 81 ends.

As shown in FIG. 8, in response to that the opening transferring process 8021 needs to be performed during performance of the energy storage process 801, it is necessary to wait for completion of the energy storage process 801 before the opening transferring process 8021 begins to be performed. Wait time 8020 represents time from reception of a transferring command from the transfer control module 401 to beginning of performance of the opening transferring process 8021.

At 821, when the energy storage process 801 is completed, the energy storage control module 402 sends the first indication signal s1 to the transferring control module 401 to indicate that the energy storage process 801 has completed.

At 822, in response to that the energy storage unit 30 releases the common power selection unit 20, the energy storage control module 402 sends the second indication signal s2 to the transferring control module 401 to indicate that the energy storage unit 30 has released the common power selection unit 20. At this time, the opening transferring process 8021 may begin to be performed.

At 823, when the opening transferring process 8021 begins to be performed, the transferring control module 401 sends the third indication signal s3 to the energy storage control module 402 to indicate that the transferring unit 10 occupies the common power selection unit 20.

At 824, when the opening transferring process 8021 ends, the transferring control module 401 sends the third indication signal s3 to the energy storage control module 402 to indicate that the transferring unit 10 releases the common power selection unit 20. So far, the second timing logic 82 ends.

As shown in FIG. 8, in response to that the closing transferring process 8022 needs to be performed during performance of the energy storage process 801, the energy storage process 801 may be suspended, then the closing transferring process 8022 begins to be performed, and performance of the energy storage process 801 resumes after closing transferring process 8022 is completed. The wait time 8020 represents the time from reception of the transferring command from the transferring control module 401 to beginning of performance of the closing transferring process 8022.

At 831, in response to that the transferring control module 401 receives the transferring command, the transferring control module 401 sends the third indication signal s3 to the energy storage control module 402 to indicate that the transferring unit 10 occupies the common power selection unit 20.

At 832, the energy storage control module 402 suspends the energy storage process 801 and sends the second indication signal s2 to the transferring control module 401 to indicate that the energy storage unit 30 has released the common power selection unit 20.

At 833, when the closing transferring process 8022 begins to be performed, the transferring control module 401 sends the third indication signal s3 to the energy storage control module 402 to indicate that the transferring unit 10 occupies the common power selection unit 20.

At 834, when the closing transferring process 8022 is completed, the transferring control module 401 sends the third indication signal s3 to the energy storage control module 402 to indicate that the transferring unit 10 releases the common power selection unit 20. The energy storage process 801 may then be resumed.

At 835, when the energy storage process 801 is completed, the energy storage control module 402 sends the first indication signal s1 to the transferring control module 401 to indicate that the energy storage process 801 has completed.

At 836, in response to that the energy storage unit 30 releases the common power selection unit 20, the energy storage control module 402 sends the second indication signal s2 to the transferring control module 401 to indicate that the energy storage unit 30 has released the common power selection unit 20. So far, the third timing logic 83 is completed.

In some embodiments, in conjunction with FIGS. 4 to 8, the transferring control module 401 is further configured to: in response to that the transferring command indicates that the transferring unit 10 is to be opened and an energy storage process of the energy storage unit 30 is not completed yet, wait for completion of the energy storage process to cause the transferring unit 10 to occupy the common power selection unit 20 after the energy storage unit 30 stops occupying the common power selection unit 20; and in response to that the transferring command indicates that the transferring unit 10 is to be opened and the energy storage unit 30 does not occupy the common power selection unit 20, cause the transferring unit 10 to occupy the common power selection unit 20.

In some embodiments, in conjunction with FIGS. 4 to 8, the transferring control module 401 is further configured to: in response to that the energy storage process is completed within a first time threshold, wait for the energy storage unit 30 to stop occupying the common power selection unit 20 to cause the transferring unit 10 to occupy the common power selection unit 20 after the energy storage unit 30 stops occupying the common power selection unit 20; and in response to that the energy storage process is not completed within the first time threshold, determine that a transferring process of the transferring unit 10 fails.

In some embodiments, in conjunction with FIGS. 4 to 8, the transferring control module 401 is further configured to: in response to that the energy storage unit 30 stops occupying the common power selection unit 20 within the second time threshold, cause the transferring unit to occupy the common power selection unit 20; and in response to that the energy storage unit 30 does not stop occupying the common power selection unit 20 within the second time threshold, determine that the transferring process of the transferring unit 10 fails.

In some embodiments, in conjunction with FIGS. 4 to 8, the transferring control module 401 is further configured to: in response to that the transferring command indicates that the transferring unit 10 is to be opened, the energy storage process of the energy storage unit 30 has been completed, and the energy storage unit 30 occupies the common power selection unit 20, wait for the energy storage unit 30 to stop occupying the common power selection unit 20; in response to that the energy storage unit 30 stops occupying the common power selection unit 20 within a second time threshold, cause the transferring unit 10 to occupy the common power selection unit 20; and in response to that the energy storage unit 30 does not stop occupying the common power selection unit 20 within the second time threshold, determine that the transferring process of the transferring unit 10 fails.

In some embodiments, in conjunction with FIGS. 4 to 8, the transferring control module 401 is further configured to: in response to that the transferring command indicates that the transferring unit 10 is to be closed, the energy storage process of the energy storage unit 30 is not completed yet, cause the transferring unit 10 to occupy the common power selection unit 20 after the energy storage unit 30 stops occupying the common power selection unit 20; and in response to that the transferring command indicates that the transferring unit 10 is to be closed and the energy storage unit 30 does not occupy the common power selection unit 20, cause the transferring unit 10 to occupy the common power selection unit 20.

In some embodiments, in conjunction with FIGS. 4 to 8, the energy storage control module is further configured to: determine whether the energy storage process of the energy storage unit 30 is completed; in response to that the energy storage process is not completed yet, cause the energy storage unit 30 to continue to occupy the common power selection unit 20; and in response to that the energy storage process has been completed, cause the energy storage unit 30 to stop occupying the common power selection unit 20.

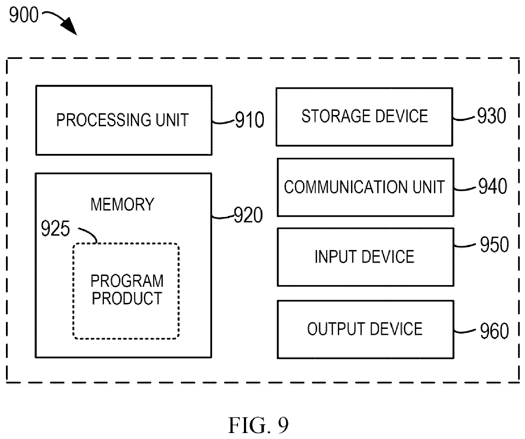

FIG. 9 illustrates a block diagram of an electronic device 900 capable of implementing one or more embodiments of the present disclosure. It should be understood that the electronic device 900 shown in FIG. 9 is merely exemplary and should not constitute any limitation on the functionality and scope of the embodiments described herein. The electronic device 900 shown in FIG. 9 may be used to implement at least part of the control unit 40 shown in FIG. 3 or the apparatus 400 shown in FIG. 4.

As shown in FIG. 9, the electronic device 900 is in a form of a general-purpose electronic device. The components of electronic device 900 may include, but are not limited to, one or more processors or processing units 910, memory 920, storage device 930, one or more communication units 940, one or more input devices 950, and one or more output devices 960. The processing unit 910 may be an actual or virtual processor and is capable of performing various processes according to programs stored in the memory 920. In a multiprocessor system, multiple processing units execute computer-executable instructions in parallel to improve parallel processing capabilities of the electronic device 900.

The electronic device 900 typically includes a number of computer storage media. Such media may be any available media that may be accessed by the electronic device 900, including, but not limited to, volatile and non-volatile media, removable and non-removable media. The memory 920 may be volatile memory (e.g., registers, cache, random access memory (RAM)), non-volatile memory (e.g., read-only memory (ROM), electrically erasable programmable read-only memory (EEPROM), flash memory), or some combination thereof. Storage device 930 may be a removable or non-removable medium and may include a machine-readable medium such as a flash drive, a magnetic disk, or any other medium that may be used to store information and/or data (e.g., training data for training) and that may be accessed within the electronic device 900.

The electronic device 900 may further include additional removable/non-removable, volatile/nonvolatile storage media. Although not shown in FIG. 9, a magnetic disk drive for reading from or writing to a removable, nonvolatile magnetic disk (e.g. 'floppy disk'), and an optical disk drive for reading from or writing to a removable, nonvolatile optical disk may be provided. In these cases, each drive may be connected to a bus (not shown) by one or more data media interfaces. The memory 920 may include a computer program product 925 having one or more program modules configured to perform various methods or actions of various embodiments of the present disclosure.

The communication unit 940 implements communication with other electronic devices through a communication medium. In addition, functions of components of the electronic device 900 may be implemented by a single computing cluster or a plurality of computing machines, and these computing machines can communicate through a communication connection. Accordingly, the electronic device 900 may operate in a networked environment using logical connections to one or more other servers, a network personal computer (PC), or another network node.

The input device 950 may be one or more input devices such as a mouse, keyboard, trackball, etc. Output device 960 may be one or more output devices such as a display, speakers, printer, etc. The electronic device 900 may also communicate with one or more external devices (not shown), such as storage devices, display devices, etc., as needed through the communication unit 940, with one or more devices that causing a user to interact with the electronic device 900, or with any device (e. g., network card, modem, etc. ) that causing the electronic device 900 to communicate with one or more other electronic devices. Such communication may be performed via an input/output (I/O) interface (not shown).

According to an exemplary implementation of the present disclosure, an apparatus for power selection control of the dual power supply transfer switch device is provided. The apparatus includes at least one processing unit and at least one memory coupled to the at least one processing unit and storing instructions for execution by the at least one processing unit, which, when executed by the at least one processing unit, cause the apparatus to perform the method described above.

According to an exemplary implementation of the present disclosure, a dual power supply transfer switch device is provided. The dual power supply transfer switch device includes: a transferring unit capable of being opened from a first switching-on position for switching on a first power supply or a second switching-on position for switching on a second power supply to a middle position and being closed from the middle position to the first switching-on position or the second switching-on position; an energy storage unit capable of assisting the a transferring unit to be opened; a common power selection unit capable of selecting, from a first power supply and the second power supply, a power supply for supplying power to the transferring unit and the energy storage unit; and any of the apparatus for power selection control of a dual power supply transfer switch device as described above.

According to an exemplary implementation of the present disclosure, a computer readable storage medium is provided, which has computer executable instructions stored thereon, wherein the computer executable instructions are executed by the processor to implement the method described above. According to an exemplary implementation of the present disclosure, a computer program product is also provided, which is tangibly stored on a non-transitory computer readable medium and includes computer executable instructions that are executed by the processor to implement the method described above.

Aspects of the present disclosure are described herein with reference to flowchart illustrations and/or block diagrams of methods, apparatus, devices and computer program products implemented according to the present disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processing unit of a general purpose computer, special purpose computer, or other programmable data processing apparatus to produce a machine, such that the instructions, which execute via the processing unit of the computer or other programmable data processing apparatus, create means for implementing the functions/acts specified in the flowchart and/or block diagram block or blocks. These computer readable program instructions may also be stored in a computer readable storage medium that cause a computer, programmable data processing apparatus, and/or other devices to work in a particular manner, such that the computer readable medium storing the instructions includes an article of manufacture including instructions which implement various aspects of the functions/acts specified in the flowchart and/or block diagram block or blocks.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions which execute on the computer, other programmable data processing apparatus, or other devices implement the functions/acts specified in the flowchart and/or block diagram block or blocks.

The flowchart and block diagrams in the drawings illustrate the architecture, functionality, and operation of possible implementations of systems, methods and computer program products according to various implementations of the present disclosure. In this regard, each block in the flowchart or block diagrams may represent a module, segment, or portion of an instruction which includes one or more executable instructions for implementing the specified logical function(s). In some alternative implementations, the functions noted in the blocks may occur out of the order noted in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

Various implementations of the present disclosure have been described above, the foregoing description is exemplary, not exhaustive, and is not limited to the implementations disclosed. Many modifications and variations will be apparent to those of ordinary skill in the art without departing from the scope of the implementations described. Choice of terms used herein is intended to best explain the principles of the implementations, the practical application, or improvements to technologies in the marketplace, or to causing others of ordinary skill in the art to understand the implementations disclosed herein.

## Claims

1. A method for power selection control of a dual power supply transfer switch device (100), the dual power supply transfer switch device (100) comprising a transferring unit (10), an energy storage unit (30) and a common power selection unit (20), wherein the transferring unit (10) is capable of being opened from a first switching-on position (11) for switching on a first power supply or a second switching-on position (12) for switching on a second power supply to a middle position (13) and being closed from the middle position (13) to the first switching-on position (11) or the second switching-on position (12), the energy storage unit (30) is capable of assisting the transferring unit (10) to be opened, and the common power selection unit (20) is capable of selecting, from the first power supply and the second power supply, a power supply for supplying power to the transferring unit (10) and the energy storage unit (30), and the method (500) is **characterised in that** it comprises:
in response to that a transferring command for the transferring unit (10) is received, determining (510) a timing of the transferring unit (10) occupying the common power selection unit (20) based on a type of the transferring command;
in response to that the transferring unit (10) does not occupy the common power selection unit (20), allowing (520) the energy storage unit (30) to occupy the common power selection unit (20); and
in response to that the transferring unit (10) occupies the common power selection unit (20), prohibiting (530) the energy storage unit (30) from occupying the common power selection unit (20).

2. The method of claim 1, wherein the determining a timing of the transferring unit (10) occupying the common power selection unit (20) based on a type of the transferring command comprises:
in response to that the transferring command indicates that the transferring unit (10) is to be opened and an energy storage process of the energy storage unit (30) is not completed yet, waiting for completion of the energy storage process to cause the transferring unit (10) to occupy the common power selection unit (20) after the energy storage unit (30) stops occupying the common power selection unit (20); and
in response to that the transferring command indicates that the transferring unit (10) is to be opened and the energy storage unit (30) does not occupy the common power selection unit (20), causing the transferring unit (10) to occupy the common power selection unit (20).

3. The method of claim 2, wherein the waiting for completion of the energy storage process comprises:
in response to that the energy storage process is completed within a first time threshold, waiting for the energy storage unit (30) to stop occupying the common power selection unit (20) to cause the transferring unit (10) to occupy the common power selection unit (20) after the energy storage unit (30) stops occupying the common power selection unit (20); and
in response to that the energy storage process is not completed within the first time threshold, determining that a transferring process of the transferring unit (10) fails.

4. The method of claim 3, wherein the waiting for the energy storage unit (30) to stop occupying the common power selection unit (20) comprises:
in response to that the energy storage unit (30) stops occupying the common power selection unit (20) within a second time threshold, causing the transferring unit (10) to occupy the common power selection unit (20); and
in response to that the energy storage unit (30) does not stop occupying the common power selection unit (20) within the second time threshold, determining that the transferring process of the transferring unit (10) fails.

5. The method of any of claims 1 to 4, wherein the determining a timing of the transferring unit (10) occupying the common power selection unit (20) based on a type of the transferring command comprises:
in response to that the transferring command indicates that the transferring unit (10) is to be opened, an energy storage process of the energy storage unit (30) has been completed, and the energy storage unit (30) occupies the common power selection unit (20), waiting for the energy storage unit (30) to stop occupying the common power selection unit (20);
in response to that the energy storage unit (30) stops occupying the common power selection unit (20) within a second time threshold, causing the transferring unit (10) to occupy the common power selection unit (20); and
in response to that the energy storage unit (30) does not stop occupying the common power selection unit (20) within the second time threshold, determining that a transferring process of the transferring unit (10) fails.

6. The method of any of claims 1 to 5, wherein the determining a timing of the transferring unit (10) occupying the common power selection unit (20) based on a type of the transferring command comprises:
in response to that the transferring command indicates that the transferring unit (10) is to be closed and an energy storage process of the energy storage unit (30) is not completed yet, causing the transferring unit (10) to occupy the common power selection unit (20) after the energy storage unit (30) suspends occupying the common power selection unit (20); and
in response to that the transferring command indicates that the transferring unit (10) is to be closed and the energy storage unit (30) does not occupy the common power selection unit (20), causing the transferring unit (10) to occupy the common power selection unit (20).

7. The method of any of claims 1 to 6, wherein in response to that the transferring unit (10) does not occupy the common power selection unit (20), allowing the energy storage unit (30) to occupy the common power selection unit (20) comprises:
determining whether an energy storage process of the energy storage unit (30) is completed;
in response to that the energy storage process is not completed yet, causing the energy storage unit (30) to continue to occupy the common power selection unit (20); and
in response to that the energy storage process has been completed, causing the energy storage unit (30) to stop occupying the common power selection unit (20).

8. The method of any of claims 1 to 7, further comprising:
detecting power supply parameters of the first power supply and the second power supply; and
based on the power supply parameters, causing the common power selection unit (20) to select, from the first power supply and the second power supply, a power supply for supplying power to the transferring unit (10) and the energy storage unit (30).

9. An apparatus for power selection control of a dual power supply transfer switch device (100), comprising:
at least one processing unit (910); and
at least one memory (920) coupled to the at least one processing unit (910) and storing instructions for execution by the at least one processing unit (910), which, when executed by the at least one processing unit (910), cause the apparatus to perform the method of any of claims 1 to 8.

10. A dual power supply transfer switch device (100), comprising:
a transferring unit (10) capable of being opened from a first switching-on position (11) for switching on a first power supply or a second switching-on position (12) for switching on a second power supply to a middle position (13) and being closed from the middle position (13) to the first switching-on position (11) or the second switching-on position (12);
an energy storage unit (30) capable of assisting the transferring unit (10) to be opened;
a common power selection unit (20) capable of selecting, from the first power supply and the second power supply, a power supply for supplying power to the transferring unit (10) and the energy storage unit (30); and
the apparatus of claim 9, configured to control an occupation timing of the transferring unit (10) and the energy storage unit (30) for the common power selection unit (20).

11. A computer readable storage medium, having a computer program stored thereon, wherein the computer program is executable by a processor to implement the method of any of claims 1 to 8.

## Patentansprüche

1. Verfahren zur Stromauswahlsteuerung eines Umschaltgeräts (100) für eine doppelte Stromversorgung, wobei das Umschaltgerät (100) für eine doppelte Stromversorgung eine Umschalteinheit (10), eine Energiespeichereinheit (30) und eine gemeinsame Stromauswahleinheit (20) umfasst, wobei die Umschalteinheit (10) in der Lage ist, aus einer ersten Einschaltposition (11) zum Einschalten einer ersten Stromversorgung oder einer zweiten Einschaltposition (12) zum Einschalten einer zweiten Stromversorgung in eine Mittelposition (13) geöffnet zu werden und aus der Mittelposition (13) in die erste Einschaltposition (11) oder die zweite Einschaltposition (12) geschlossen zu werden, die Energiespeichereinheit (30) in der Lage ist, die Umschalteinheit (10) dabei zu unterstützen, geöffnet zu werden, und die gemeinsame Stromauswahleinheit (20) in der Lage ist, aus der ersten Stromversorgung und der zweiten Stromversorgung eine Stromversorgung zum Zuführen von Strom zu der Umschalteinheit (10) und der Energiespeichereinheit (30) auszuwählen, und das Verfahren (500) **dadurch gekennzeichnet ist, dass** es Folgendes umfasst:
als Reaktion darauf, dass ein Umschaltbefehl für die Umschalteinheit (10) empfangen wird, Bestimmen (510) eines Zeitpunkts, zu dem die Umschalteinheit (10) die gemeinsame Stromauswahleinheit (20) belegt, basierend auf einem Typ des Umschaltbefehls;
als Reaktion darauf, dass die Umschalteinheit (10) die gemeinsame Stromauswahleinheit (20) nicht belegt, Erlauben (520) der Energiespeichereinheit (30), die gemeinsame Stromauswahleinheit (20) zu belegen; und
als Reaktion darauf, dass die Umschalteinheit (10) die gemeinsame Stromauswahleinheit (20) belegt, Verbieten (530) der Energiespeichereinheit (30), die gemeinsame Stromauswahleinheit (20) zu belegen.

2. Verfahren nach Anspruch 1, wobei das Bestimmen eines Zeitpunkts, zu dem die Umschalteinheit (10) die gemeinsame Stromauswahleinheit (20) belegt, basierend auf einem Typ des Umschaltbefehls Folgendes umfasst:
als Reaktion darauf, dass der Umschaltbefehl anzeigt, dass die Umschalteinheit (10) geöffnet werden soll, und dass ein Energiespeicherprozess der Energiespeichereinheit (30) noch nicht abgeschlossen ist, Warten auf den Abschluss des Energiespeicherprozesses, um zu veranlassen, dass die Umschalteinheit (10) die gemeinsame Stromauswahleinheit (20) belegt, nachdem die Energiespeichereinheit (30) die Belegung der gemeinsamen Stromauswahleinheit (20) beendet hat; und
als Reaktion darauf, dass der Umschaltbefehl anzeigt, dass die Umschalteinheit (10) geöffnet werden soll, und dass die Energiespeichereinheit (30) die gemeinsame Stromauswahleinheit (20) nicht belegt, Veranlassen, dass die Umschalteinheit (10) die gemeinsame Stromauswahleinheit (20) belegt.

3. Verfahren nach Anspruch 2, wobei das Warten auf den Abschluss des Energiespeicherprozesses Folgendes umfasst:
als Reaktion darauf, dass der Energiespeicherprozess innerhalb eines ersten Zeitschwellenwerts abgeschlossen ist, Warten darauf, dass die Energiespeichereinheit (30) die Belegung der gemeinsamen Stromauswahleinheit (20) beendet, um zu veranlassen, dass die Umschalteinheit (10) die gemeinsame Stromauswahleinheit (20) belegt, nachdem die Energiespeichereinheit (30) die Belegung der gemeinsamen Stromauswahleinheit (20) beendet hat; und
als Reaktion darauf, dass der Energiespeicherprozess nicht innerhalb des ersten Zeitschwellenwerts abgeschlossen ist, Bestimmen, dass ein Umschaltprozess der Umschalteinheit (10) fehlschlägt.

4. Verfahren nach Anspruch 3, wobei das Warten darauf, dass die Energiespeichereinheit (30) die Belegung der gemeinsamen Stromauswahleinheit (20) beendet, Folgendes umfasst:
als Reaktion darauf, dass die Energiespeichereinheit (30) die Belegung der gemeinsamen Stromauswahleinheit (20) innerhalb eines zweiten Zeitschwellenwerts beendet, Veranlassen, dass die Umschalteinheit (10) die gemeinsame Stromauswahleinheit (20) belegt; und
als Reaktion darauf, dass die Energiespeichereinheit (30) die Belegung der gemeinsamen Stromauswahleinheit (20) nicht innerhalb des zweiten Zeitschwellenwerts beendet, Bestimmen, dass der Umschaltprozess der Umschalteinheit (10) fehlschlägt.

5. Verfahren nach einem der Ansprüche 1 bis 4, wobei das Bestimmen eines Zeitpunkts, zu dem die Umschalteinheit (10) die gemeinsame Stromauswahleinheit (20) belegt, basierend auf einem Typ des Umschaltbefehls Folgendes umfasst:
als Reaktion darauf, dass der Umschaltbefehl anzeigt, dass die Umschalteinheit (10) geöffnet werden soll, dass ein Energiespeicherprozess der Energiespeichereinheit (30) abgeschlossen worden ist und dass die Energiespeichereinheit (30) die gemeinsame Stromauswahleinheit (20) belegt, Warten darauf, dass die Energiespeichereinheit (30) die Belegung der gemeinsamen Stromauswahleinheit (20) beendet;
als Reaktion darauf, dass die Energiespeichereinheit (30) die Belegung der gemeinsamen Stromauswahleinheit (20) innerhalb eines zweiten Zeitschwellenwerts beendet, Veranlassen, dass die Umschalteinheit (10) die gemeinsame Stromauswahleinheit (20) belegt; und
als Reaktion darauf, dass die Energiespeichereinheit (30) die Belegung der gemeinsamen Stromauswahleinheit (20) nicht innerhalb des zweiten Zeitschwellenwerts beendet, Bestimmen, dass ein Umschaltprozess der Umschalteinheit (10) fehlschlägt.

6. Verfahren nach einem der Ansprüche 1 bis 5, wobei das Bestimmen eines Zeitpunkts, zu dem die Umschalteinheit (10) die gemeinsame Stromauswahleinheit (20) belegt, basierend auf einem Typ des Umschaltbefehls Folgendes umfasst:
als Reaktion darauf, dass der Umschaltbefehl anzeigt, dass die Umschalteinheit (10) geschlossen werden soll, und dass ein Energiespeicherprozess der Energiespeichereinheit (30) noch nicht abgeschlossen ist, Veranlassen, dass die Umschalteinheit (10) die gemeinsame Stromauswahleinheit (20) belegt, nachdem die Energiespeichereinheit (30) die Belegung der gemeinsamen Stromauswahleinheit (20) ausgesetzt hat; und
als Reaktion darauf, dass der Umschaltbefehl anzeigt, dass die Umschalteinheit (10) geschlossen werden soll, und dass die Energiespeichereinheit (30) die gemeinsame Stromauswahleinheit (20) nicht belegt, Veranlassen, dass die Umschalteinheit (10) die gemeinsame Stromauswahleinheit (20) belegt.

7. Verfahren nach einem der Ansprüche 1 bis 6, wobei das Erlauben der Energiespeichereinheit (30), die gemeinsame Stromauswahleinheit (20) zu belegen, als Reaktion darauf, dass die Umschalteinheit (10) die gemeinsame Stromauswahleinheit (20) nicht belegt, Folgendes umfasst:
Bestimmen, ob ein Energiespeicherprozess der Energiespeichereinheit (30) abgeschlossen ist;
als Reaktion darauf, dass der Energiespeicherprozess noch nicht abgeschlossen ist, Veranlassen, dass die Energiespeichereinheit (30) die gemeinsame Stromauswahleinheit (20) weiterhin belegt; und
als Reaktion darauf, dass der Energiespeicherprozess abgeschlossen worden ist, Veranlassen, dass die Energiespeichereinheit (30) die Belegung der gemeinsamen Stromauswahleinheit (20) beendet.

8. Verfahren nach einem der Ansprüche 1 bis 7, ferner umfassend:
Erfassen von Stromversorgungsparametern der ersten Stromversorgung und der zweiten Stromversorgung; und
basierend auf den Stromversorgungsparametern Veranlassen, dass die gemeinsame Stromauswahleinheit (20) aus der ersten Stromversorgung und der zweiten Stromversorgung eine Stromversorgung zum Zuführen von Strom zu der Umschalteinheit (10) und der Energiespeichereinheit (30) auswählt.

9. Vorrichtung zur Stromauswahlsteuerung eines Umschaltgeräts (100) für eine doppelte Stromversorgung, umfassend:
mindestens eine Verarbeitungseinheit (910); und
mindestens einen Speicher (920), der mit der mindestens einen Verarbeitungseinheit (910) gekoppelt ist und Anweisungen zur Ausführung durch die mindestens eine Verarbeitungseinheit (910) speichert, wobei die Anweisungen bei Ausführung durch die mindestens eine Verarbeitungseinheit (910) die Vorrichtung veranlassen, das Verfahren nach einem der Ansprüche 1 bis 8 durchzuführen.

10. Umschaltgerät (100) für eine doppelte Stromversorgung, umfassend:
eine Umschalteinheit (10), die in der Lage ist, aus einer ersten Einschaltposition (11) zum Einschalten einer ersten Stromversorgung oder einer zweiten Einschaltposition (12) zum Einschalten einer zweiten Stromversorgung in eine Mittelposition (13) geöffnet zu werden und aus der Mittelposition (13) in die erste Einschaltposition (11) oder die zweite Einschaltposition (12) geschlossen zu werden;
eine Energiespeichereinheit (30), die in der Lage ist, die Umschalteinheit (10) dabei zu unterstützen, geöffnet zu werden;
eine gemeinsame Stromauswahleinheit (20), die in der Lage ist, aus der ersten Stromversorgung und der zweiten Stromversorgung eine Stromversorgung zum Zuführen von Strom zu der Umschalteinheit (10) und der Energiespeichereinheit (30) auszuwählen; und
die Vorrichtung nach Anspruch 9, die dazu ausgebildet ist, einen Belegungszeitpunkt der Umschalteinheit (10) und der Energiespeichereinheit (30) für die gemeinsame Stromauswahleinheit (20) zu steuern.

11. Computerlesbares Speichermedium, umfassend ein darauf gespeichertes Computerprogramm, wobei das Computerprogramm durch einen Prozessor ausführbar ist, um das Verfahren nach einem der Ansprüche 1 bis 8 zu implementieren.

## Revendications

1. Procédé de commande de sélection d'alimentation d'un dispositif de commutation de transfert à double alimentation électrique (100), le dispositif de commutation de transfert à double alimentation électrique (100) comprenant une unité de transfert (10), une unité de stockage d'énergie (30) et une unité commune de sélection d'alimentation (20), dans lequel l'unité de transfert (10) est apte à être ouverte depuis une première position de mise sous tension (11) pour mettre sous tension une première alimentation électrique ou une seconde position de mise sous tension (12) pour mettre sous tension une seconde alimentation électrique jusqu'à une position intermédiaire (13) et à être fermée depuis la position intermédiaire (13) jusqu'à la première position de mise sous tension (11) ou la seconde position de mise sous tension (12), l'unité de stockage d'énergie (30) étant apte à aider l'unité de transfert (10) à être ouverte, et l'unité commune de sélection d'alimentation (20) étant apte à sélectionner, parmi la première alimentation électrique et la seconde alimentation électrique, une alimentation électrique pour fournir de l'énergie à l'unité de transfert (10) et à l'unité de stockage d'énergie (30), et le procédé (500) étant **caractérisé en ce qu'**il comprend les étapes consistant à :
en réponse au fait qu'un ordre de transfert destiné à l'unité de transfert (10) est reçu, déterminer (510) un moment auquel l'unité de transfert (10) occupe l'unité commune de sélection d'alimentation (20) sur la base d'un type de l'ordre de transfert ;
en réponse au fait que l'unité de transfert (10) n'occupe pas l'unité commune de sélection d'alimentation (20), permettre (520) à l'unité de stockage d'énergie (30) d'occuper l'unité commune de sélection d'alimentation (20) ; et
en réponse au fait que l'unité de transfert (10) occupe l'unité commune de sélection d'alimentation (20), interdire (530) à l'unité de stockage d'énergie (30) d'occuper l'unité commune de sélection d'alimentation (20).

2. Procédé selon la revendication 1, dans lequel la détermination d'un moment auquel l'unité de transfert (10) occupe l'unité commune de sélection d'alimentation (20) sur la base d'un type de l'ordre de transfert comprend les opérations consistant à :
en réponse au fait que l'ordre de transfert indique que l'unité de transfert (10) doit être ouverte et qu'un processus de stockage d'énergie de l'unité de stockage d'énergie (30) n'est pas encore achevé, attendre l'achèvement du processus de stockage d'énergie pour amener l'unité de transfert (10) à occuper l'unité commune de sélection d'alimentation (20) après que l'unité de stockage d'énergie (30) cesse d'occuper l'unité commune de sélection d'alimentation (20) ; et
en réponse au fait que l'ordre de transfert indique que l'unité de transfert (10) doit être ouverte et que l'unité de stockage d'énergie (30) n'occupe pas l'unité commune de sélection d'alimentation (20), amener l'unité de transfert (10) à occuper l'unité commune de sélection d'alimentation (20).

3. Procédé selon la revendication 2, dans lequel l'attente de l'achèvement du processus de stockage d'énergie comprend les opérations consistant à :
en réponse au fait que le processus de stockage d'énergie est achevé dans un premier seuil temporel, attendre que l'unité de stockage d'énergie (30) cesse d'occuper l'unité commune de sélection d'alimentation (20) pour amener l'unité de transfert (10) à occuper l'unité commune de sélection d'alimentation (20) après que l'unité de stockage d'énergie (30) cesse d'occuper l'unité commune de sélection d'alimentation (20) ; et
en réponse au fait que le processus de stockage d'énergie n'est pas achevé dans le premier seuil temporel, déterminer qu'un processus de transfert de l'unité de transfert (10) échoue.

4. Procédé selon la revendication 3, dans lequel l'attente que l'unité de stockage d'énergie (30) cesse d'occuper l'unité commune de sélection d'alimentation (20) comprend les opérations consistant à :
en réponse au fait que l'unité de stockage d'énergie (30) cesse d'occuper l'unité commune de sélection d'alimentation (20) dans un second seuil temporel, amener l'unité de transfert (10) à occuper l'unité commune de sélection d'alimentation (20) ; et
en réponse au fait que l'unité de stockage d'énergie (30) ne cesse pas d'occuper l'unité commune de sélection d'alimentation (20) dans le second seuil temporel, déterminer que le processus de transfert de l'unité de transfert (10) échoue.

5. Procédé selon l'une des revendications 1 à 4, dans lequel la détermination d'un moment auquel l'unité de transfert (10) occupe l'unité commune de sélection d'alimentation (20) sur la base d'un type de l'ordre transfert comprend les opérations consistant à :
en réponse au fait que l'ordre de transfert indique que l'unité de transfert (10) doit être ouverte, qu'un processus de stockage d'énergie de l'unité de stockage d'énergie (30) est achevé et que l'unité de stockage d'énergie (30) occupe l'unité commune de sélection d'alimentation (20), attendre que l'unité de stockage d'énergie (30) cesse d'occuper l'unité commune de sélection d'alimentation (20) ;
en réponse au fait que l'unité de stockage d'énergie (30) cesse d'occuper l'unité commune de sélection d'alimentation (20) dans un second seuil temporel, amener l'unité de transfert (10) à occuper l'unité commune de sélection d'alimentation (20) ; et
en réponse au fait que l'unité de stockage d'énergie (30) ne cesse pas d'occuper l'unité commune de sélection d'alimentation (20) dans le second seuil temporel, déterminer qu'un processus de transfert de l'unité de transfert (10) échoue.

6. Procédé selon l'une des revendications 1 à 5, dans lequel la détermination d'un moment auquel l'unité de transfert (10) occupe l'unité commune de sélection d'alimentation (20) sur la base d'un type de l'ordre de transfert comprend les opérations consistant à :
en réponse au fait que l'ordre de transfert indique que l'unité de transfert (10) doit être fermée et qu'un processus de stockage d'énergie de l'unité de stockage d'énergie (30) n'est pas encore achevé, amener l'unité de transfert (10) à occuper l'unité commune de sélection d'alimentation (20) après que l'unité de stockage d'énergie (30) suspend son occupation de l'unité commune de sélection d'alimentation (20) ; et
en réponse au fait que l'ordre de transfert indique que l'unité de transfert (10) doit être fermée et que l'unité de stockage d'énergie (30) n'occupe pas l'unité commune de sélection d'alimentation (20), amener l'unité de transfert (10) à occuper l'unité commune de sélection d'alimentation (20).

7. Procédé selon l'une des revendications 1 à 6, dans lequel, en réponse au fait que l'unité de transfert (10) n'occupe pas l'unité commune de sélection d'alimentation (20), la permission à l'unité de stockage d'énergie (30) d'occuper l'unité commune de sélection d'alimentation (20) comprend les opérations consistant à :
déterminer si un processus de stockage d'énergie de l'unité de stockage d'énergie (30) est achevé ;
en réponse au fait que le processus de stockage d'énergie n'est pas encore achevé, amener l'unité de stockage d'énergie (30) à continuer d'occuper l'unité commune de sélection d'alimentation (20) ; et
en réponse au fait que le processus de stockage d'énergie est achevé, amener l'unité de stockage d'énergie (30) à cesser d'occuper l'unité commune de sélection d'alimentation (20).

8. Procédé selon l'une des revendications 1 à 7, comprenant en outre les étapes consistant à :
détecter des paramètres d'alimentation électrique de la première alimentation électrique et de la seconde alimentation électrique ; et
sur la base des paramètres d'alimentation électrique, amener l'unité commune de sélection d'alimentation (20) à sélectionner, parmi la première alimentation électrique et la seconde alimentation électrique, une alimentation électrique pour fournir de l'énergie à l'unité de transfert (10) et à l'unité de stockage d'énergie (30).

9. Appareil de commande de sélection d'alimentation d'un dispositif de commutation de transfert à double alimentation électrique (100), comprenant :
au moins une unité de traitement (910) ; et
au moins une mémoire (920) couplée à ladite au moins une unité de traitement (910) et stockant des instructions destinées à être exécutées par ladite au moins une unité de traitement (910), lesquelles, lorsqu'elles sont exécutées par ladite au moins une unité de traitement (910), amènent l'appareil à mettre en œuvre le procédé selon l'une des revendications 1 à 8.

10. Dispositif de commutation de transfert à double alimentation électrique (100), comprenant :
une unité de transfert (10) apte à être ouverte depuis une première position de mise sous tension (11) pour mettre sous tension une première alimentation électrique ou une seconde position de mise sous tension (12) pour mettre sous tension une seconde alimentation électrique jusqu'à une position intermédiaire (13) et à être fermée depuis la position intermédiaire (13) jusqu'à la première position de mise sous tension (11) ou la seconde position de mise sous tension (12) ;
une unité de stockage d'énergie (30) apte à aider l'unité de transfert (10) à être ouverte ;
une unité commune de sélection d'alimentation (20) apte à sélectionner, parmi la première alimentation électrique et la seconde alimentation électrique, une alimentation électrique pour fournir de l'énergie à l'unité de transfert (10) et à l'unité de stockage d'énergie (30) ; et
l'appareil selon la revendication 9, configuré pour commander un moment d'occupation de l'unité de transfert (10) et de l'unité de stockage d'énergie (30) pour l'unité commune de sélection d'alimentation (20).

11. Support de stockage lisible par ordinateur, présentant un programme d'ordinateur stocké sur celui-ci, dans lequel le programme d'ordinateur est exécutable par un processeur pour mettre en œuvre le procédé selon l'une des revendications 1 à 8.
